# EUROPÄISCHE PATENTSCHRIFT

(11) **EP 0 396 985 B1**
(45) Veröffentlichungstag und Bekanntmachung des Hinweises auf die Patenterteilung: **15.03.1995**
(21) Anmeldenummer: 90108086.1
(22) Anmeldetag: 27.04.1990
(51) Int. Cl.: G11B 15/44

(54) **Kassettentonbandgerät für Reversebetrieb**
Audio tape cassette apparatus for reverse mode operation
Appareil à cassette à bande audio pour le fonctionnement en mode d'inversion

(30) Priorität: 11.05.1989 DE 3915427
(43) Veröffentlichungstag der Anmeldung: 14.11.1990
(73) Patentinhaber: Blaupunkt-Werke GmbH, 31132 Hildesheim (DE)
(72) Erfinder: Hapke, Walter, D-3200 Hildesheim (DE); Schochow, Karl, D-3200 Hildesheim (DE)

(56) Entgegenhaltungen:
- EP-A- 0 093 984
- EP-A- 0 193 942
- EP-A- 0 295 726
- DE-A- 3 411 919
- DE-A- 3 617 278
- FR-A- 2 506 493
- GB-A- 2 062 934
- US-A- 4 430 680

## Beschreibung

Die Erfindung betrifft ein Kassettentonbandgerät für Reversebetrieb gemäß dem Oberbegriff des Patentanspruchs 1.

Bei derartigen Kassettentonbandgeräten ist es erforderlich, Mittel zur Umschaltung der Laufrichtung und der Normallauf/Schnellauf-Funktion der Wickelteller vorzusehen.

Es ist bekannt, hierfür manuell betätigte mechanische Tastenschalter vorzusehen, die jedoch zur Bedienung einen hohen Kraftaufwand erfordern. Es ist ferner bekannt, statt mechanischer Tastenschalter elektrische Tasten in Verbindung mit Steuermagneten zu verwenden. Derartige Anordnungen sind jedoch sehr aufwendig.

Aus der US-A-4 430 680 ist ein Kassettentonbandgerät für Reversebetrieb bekannt, bei dem die Kraft des Antriebsmotors zusätzlich zur Durchführung von mechanischen Schaltvorgängen genutzt wird.

Der Erfindung liegt die Aufgabe zugrunde, die sich aus ihren Schaltstellungen ergebenden Informationen der in einem Laufwerk vorhandenen Schnellauf/Normallauf- und Reverse-Schieber für die Steuerung des Schaltgetriebes für die Wickelteller zu nutzen.

Diese Aufgabe wird erfindungsgemäß durch die im kennzeichnenden Teil des Anspruchs 1 angegebenen Maßnahmen gelöst.

Die mit der Erfindung erzielten Vorteile bestehen insbesondere darin, daß die Steuereinrichtung es ermöglicht, mit beliebigem Timing sowohl die Reversefunktion als auch die Geschwindigkeitsumschaltung vorzunehmen. Es ist also ohne Belang, ob eine Reverse-Umschaltung gleichzeitig mit einer Umschaltung von Normallauf auf Schnellauf oder umgekehrt erfolgt, oder ob eine Funktion vor oder nach einer anderen Funktion abläuft. Dadurch ist zudem eine universelle und unproblematische Steuerungsmöglichkeit des mechanischen Laufwerks durch eine elektronische Schaltung möglich.

Durch die in den Unteransprüchen aufgeführten Maßnahmen sind vorteilhafte Ausgestaltungen des Kassettentonbandgerätes möglich.

Ein Ausführungsbeispiel der Erfindung ist in der Zeichnung dargestellt und wird im folgenden näher beschrieben.

Es zeigen:
- Figur 1: eine prinzipielle Darstellung eines Kassettentonbandgerätes mit einem Schaltgetriebe für Normallauf, Schnelllauf und Reversebetrieb,

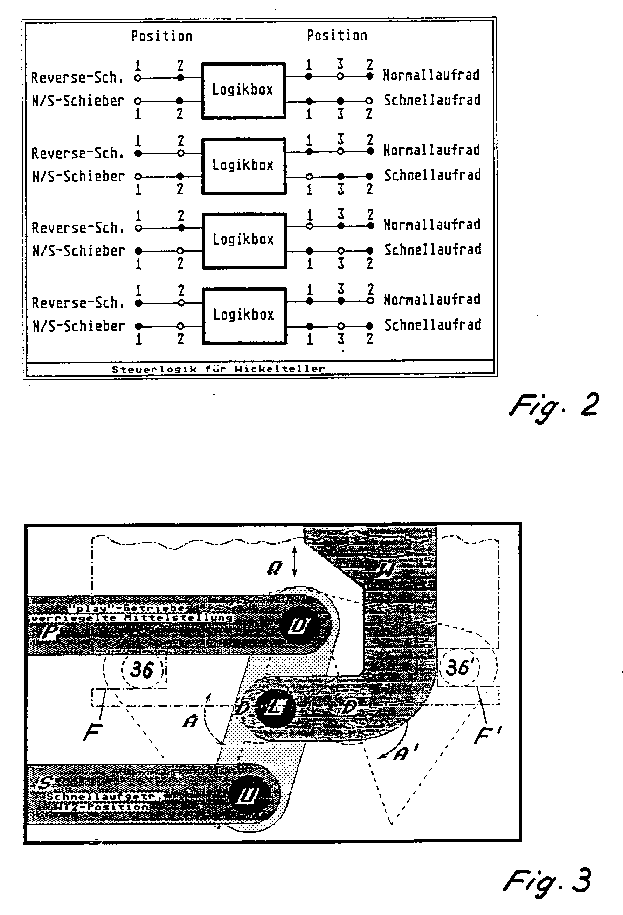

- Figur 2: die Wahrheitstabelle der verwendeten mechanischen Logikschaltung und

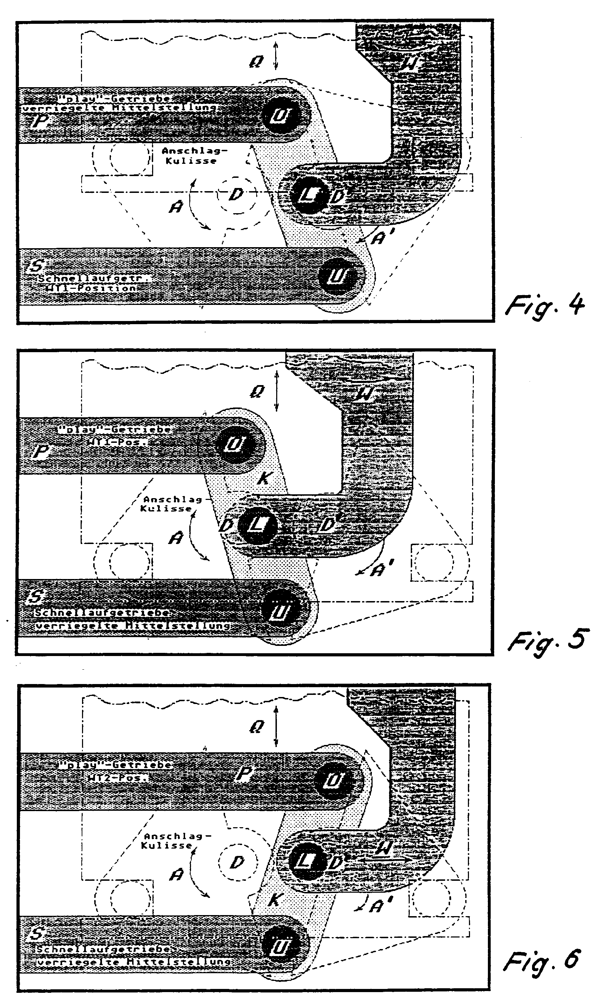

- Figur 3 bis Figur 6: ein Ausführungsbeispiel der mechanischen Logikschaltung in den vier möglichen Schaltstellungen

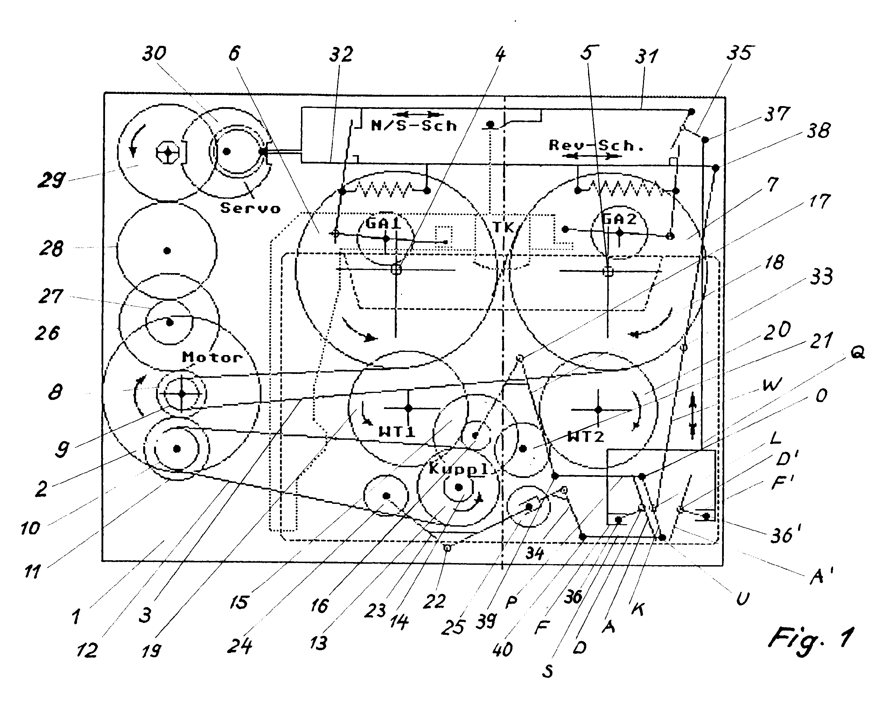

Auf einem in der Figur 1 dargestellten Chassis 1 ist ein Elektromotor 2 vorgesehen, der in an sich bekannter Weise mittels eines ersten Treibriemens 3 auf den Tonwellen 4, 5 angebrachte Schwungscheiben 6, 7 antreibt. Auf der mit einer Riemenscheibe 9 versehenen Motorachse ist ein Zahnrad 8 angebracht, welches ein mit einer Riemenscheibe 10 versehenes Zahnrad 11 antreibt. Die Riemenscheibe 10 treibt über einen zweiten Treibriemen 12 eine Riemenscheibe 13 an, die über eine Rutschkupplung oder Magnetkupplung mit einem auf gleicher Achse angeordneten Zahnrad 14 gekuppelt ist. Dieses Zahnrad 14 befindet sich im Eingriff mit einem größeren Zahnrad 15, das mit einem kleineren, als Schaltrad dienenden Zahnrad 16 gekoppelt, auf einem am Chassis 1 in einem Drehpunkt 17 gelagerten V-förmigen Hebel 18 angeordnet ist.

Das Zahnrad 16 befindet sich 1t. Figur 1 mit dem Zahnrad 19 für den Wickelteller WT1 im Eingriff. Das Zahnrad 16 kann aber auch je nach Stellung des V-förmigen Hebels 18 außer Eingriff mit dem Zahnrad 19 oder mit einem mit dem Zahnrad 20 für den Wickelteller WT2 im Eingriff stehenden Zwischenrad 21 in Eingriff gebracht werden. Auf einem weiteren in einem Drehpunkt 22 am Chassis 1 schwenkbar gelagerten V-förmigen Hebel 23 sind zwei als Schalträder dienende Zahnräder 24, 25 angeordnet, die sich in der in Figur 1 dargestellten Mittelstellung des V-förmigen Hebels 23 außer Eingriff mit anderen Zahnrädern befinden. Die Zahnräder 24, 25 können jedoch in den beiden anderen Schaltstellungen des Hebels 23 derart antriebswirksam werden, daß ein auf der Riemenscheibe 13 vorgesehenes Zahnrad entweder über das Zahnrad 24 mit dem Zahnrad 19 für den Wickelteller WT1 oder über das Zahnrad 25 mit dem Zwischenzahnrad 21 verbunden wird.

Ein vom Motor 2 über Zahnräder 26, 27, 28, 29 antreibbares elektromechanisch koppelbares Getriebe 30 steuert einen Normallauf/Schnelllauf-Schieber 31 und einen Reverse-Schieber 32 in jeweils eine von zwei möglichen Schaltstellungen. Auf die von diesen Schiebern 31, 32 bewirkte Ansteuerung der Gummi-Andruckrollen GA1, GA2 und des Tonkopfes TK soll hier nicht näher eingegangen werden, wohl aber auf eine Steuerung des Schaltgetriebes für den Wickeltellerantrieb.

Da jedoch sowohl der für den Normallauf zuständige Hebel 18 als auch der für den Schnellauf zuständige Hebel 23 eine antriebsunwirksame mittige Schaltstellung erfordert, wenn der jeweils andere Hebel 18 oder 23 eine einen Wickeltellerantrieb bewirkende Schaltstellung aufweist, sind für jede der beiden Antriebsarten drei Schaltstellungen erforderlich. Die Gewinnung der hierfür erforderlichen Schaltbefehle aus den beiden Endpositionen der Schnellauf/Normallauf- bzw. Reverse-Schieber 31, 32 erfolgt mittels einer nachstehend beschriebenen mechanischen Logikschaltung.

Ein mit einem Ende am Reverse-Schieber 32 angelenkter, etwa rechtwinklig zu ihm angeordneter zweiarmiger, in einem Drehpunkt 33 am Chassis 1 schwenkbar gelagerter zweiarmiger Hebel W, weist an seinem anderen Ende einen Drehpunkt L auf, in dem eine zwei Gelenkzapfen O, U aufweisende schwenkbare Wippe K mittig gelagert ist. Ein Hebel P verbindet den Gelenkzapfen O gelenkig mit dem Hebel 18 für die Normallaufumschaltung und ein Hebel S den Gelenkzapfen U über einen Zwischenhebel 34 gelenkig mit dem Hebel 23 für die Schnellaufumschaltung. Der Schwenkbereich der Wippe K wird durch zwei spiegelbildlich angeordnete, in je einem Drehpunkt D, D′ am Chassis 1 schwenkbar gelagerte Anschlagkulissen A, A′ begrenzt.

Ein senkrecht zur Bewegungsrichtung des Drehpunktes L der Wippe K bewegbarer Steuerschieber Q ist über eine Hebelanordnung 35 an den senkrecht zum Steuerschieber Q angeordneten Normallauf/Schnellauf-Schieber 31 angelenkt, so daß auch der Steuerschieber Q zwei Schaltstellungen aufweist. Im Steuerschieber Q sind zwei quer zu seiner Bewegungsrichtung angordnete, als Steuerkurven wirkende Führungsschlitze F, F′ vorgesehen, in die an den Anschlagkulissen A, A′ vorgesehene Führungszapfen 36, 36′derart eingreifen, daß in der Stellung Normallauf der mit der Umschaltmechanik für den Schnellaufantrieb verbundene Gelenkzapfen U der Wippe K, einen Drehpunkt für die Wippe K bildend, in der für den Schnellauf unwirksamen Mittelstellung eingeklemmt ist, daß in der Stellung Schnelllauf der mit der Umschaltmechamik für den Normallaufbetrieb verbundene Gelenkzapfen O der Wippe K, ebenfalls einen Drehpunkt für die Wippe K bildend, in der für den Normallauf antriebsunwirksamen Mittelstellung eingeklemmt ist.

Die Eingänge 37, 38 der mechanischen Logikschaltung werden durch die Gelenkverbindungen zwischen der Hebelanordnung 35 und dem Steuerschieber Q sowie durch die Gelenkverbindung zwischen dem Reverseschieber 32 und dem Hebel W gebildet, während die Ausgänge 39, 40 durch die Gelenkverbindungen zwischen dem Hebel 18 und dem Hebel P sowie durch die Gelenkverbindung zwischen dem Zwischenhebel 34 und dem Hebel S gebildet werden.

## Patentansprüche

1. Kassettentonbandgerät für Reversebetrieb mit einer Steuereinrichtung für ein die Wickelteller (WT1, WT2) antreibendes Schaltgetriebe, einem Schnellauf/Normallauf-Schieber (31) und einem Reverse-Schieber (32),
dadurch gekennzeichnet,
daß die je zwei Schaltstellungen aufweisenden Schnellauf/Normallauf-Schieber (31) und Reverse-Schieber (32) mit jeweils einem Eingang (37, 38) einer mechanischen Logikschaltung (W, Q, L, K, O, U, D, D′, F, F′, A, A′, P, S) gekuppelt sind, deren beide jeweils eine antriebsunwirksame und zwei antriebswirksame Schaltstellungen aufweisenden Ausgänge (39, 40) mit Schaltelementen zur Umschaltung des Schaltgetriebes (13, 14, 15, 16, 19, 20, 21, 24, 25) gekuppelt sind, daß die mechanische Logikschaltung derart ausgebildet ist, daß jeder ihrer beiden Ausgänge (39, 40) die antriebsunwirksame Schaltstellung einnimmt, wenn sich der jeweils andere Ausgang in einer der beiden antriebswirksamen Schaltstellungen befindet, in der einer der möglichen Antriebe mit einem der Wickelteller (WT1, WT2) im Eingriff ist, daß ein um einen Drehpunkt (33) schwenkbar am Chassis (1) gelagerter zweiarmiger Hebel (W), der mit einem Hebelarm gelenkig mit dem Reverse-Schieber (32) verbunden ist, an seinem anderen Hebelarm einen Drehpunkt (L) aufweist, in dem eine zwei Gelenkzapfen (O, U) aufweisende schwenkbare Wippe (K) mittig gelagert ist, daß zwei, den Schwenkbereich der Wippe (K) begrenzende, in je einem Drehpunkt (D, D′) am Chassis (1) schwenkbar gelagerte Anschlagkulissen (A, A′) vorgesehen sind, welche mit einem senkrecht zur Bewegungsrichtung des Drehpunktes (L) der Wippe (K) bewegbaren, über eine Hebelanordnung (35) mit dem Normallauf/Schnellauf-Schieber (31) gekuppelten Steuerschieber (Q) über Führungselemente (F, F′; 36, 36′) derart im Eingriff stehen, daß in der Stellung Normallauf der mit der Umschaltmechanik für den Schnellaufantrieb gelenkig verbundene Gelenkzapfen (U) der Wippe (K), einen Drehpunkt bildend, in einer für den Schnellauf antriebsunwirksamen Mittelstellung eingeklemmt ist, daß in der Stellung Schnellauf der mit der Umschaltmechanik für Normallaufantrieb gelenkig verbundene andere Gelenkzapfen (O) der Wippe (K), ebenfalls einen Drehpunkt bildend, in einer für den Normallauf antriebsunwirksamen Mittelstellung eingeklemmt ist.

2. Kassettentonbandgerät nach Anspruch 1,
dadurch gekennzeichnet,
daß die Schnellauf/Normallauf- und die Reverse-Umschaltung dadurch erfolgt, daß für jede der beiden Umschaltarten mindestens ein Schaltrad (16; 24, 25) vorgesehen ist, welches jeweils in einer mittleren Schaltstellung außer Eingriff und in seinen beiden weiteren Schaltstellungen im Eingriff mit dem Umschaltgetriebe ist.

3. Kassettentonbandgerät nach einem der Ansprüche 1 oder 2,
dadurch gekennzeichnet,
daß zur Betätigung der Normallauf/Schnellauf- und der Reverse-Schieber (31, 32) ein mit ihnen im Eingriff stehendes elektromechanisch koppelbares Getriebe (30) vorgesehen ist.

4. Kassettentonbandgerät nach Anspruch 3,
dadurch gekennzeichnet,
daß das elektromechanisch koppelbare Getriebe (30) vom Motor (2) des Kassettenlaufwerkes angetrieben wird.

## Claims

1. Audio tape cassette apparatus for reverse mode operation with a control device for a switching mechanism which drives the hubs (WT1, WT2), a fast-mode/normal-mode slide (31) and a reverse slide (32), characterized in that the fast-mode/normal-mode slides (31) and reverse slides (32) which each have two switched positions are coupled to in each case one input (37, 38) of a mechanical logic circuit (W, Q, L, K, O, U, D, D′, F, F′, A, A′, P, S) whose two outputs (39, 40) which each have one switched position which is ineffective in terms of drive and two switched positions which are effective in terms of drive are coupled to switching elements in order to switch over the switching mechanism (13, 14, 15, 16, 19, 20, 21, 24, 25), in that the mechanical logic circuit is constructed in such a way that each of its two outputs (39, 40) assumes the switched position which is ineffective in terms of drive when the respective other output is situated in one of the two switched positions which are effective in terms of drive and in which one of the possible drives is engaged with one of the hubs (WT1, WT2), in that a two-armed lever (W) which is mounted on the chassis (1) so as to be capable of pivoting about a pivot (33) and is connected with one lever arm to the reverse slide (32) in an articulated fashion has at its other lever arm a pivot (L) in which a pivotable rocker (K) which has two pivot pins (O, U) is mounted centrally, in that two stops (A, A′) are provided, which bound the pivoting range of the rocker (K) and are pivotably mounted in each case in one pivot (D, D′) on the chassis (1) and are engaged via guide elements (F, F′; 36, 36′) with a control slide (Q) which can be moved perpendicularly to the direction of movement of the pivot (L) of the rocker (K) and is coupled to the normal-mode/fast-mode slide (31) via a lever arrangement (35) in such a way that in the normal-mode position the pivot pin (W), connected to the switch-over mechanism for the fast-mode drive in an articulated fashion, of the rocker (K) is clamped, forming a pivot, in a central position which is ineffective in terms of drive for fast-mode, in that, in the fast-mode position, the other pivot pin (O), which is connected to the switch-over mechanism for normal-mode drive in an articulated fashion, of the rocker (K) is clamped, likewise forming a pivot, in a central position which is ineffective in terms of drive for the normal mode.

2. Audio tape cassette apparatus according to Claim 1, characterized in that the switch-over between fast-mode and normal-mode and the reverse switch-over take place by being at least one switching wheel (16; 24, 25) is provided for each of the two types of switching over, which switching wheel (16; 24, 25) is respectively disengaged from the switch-over mechanism in a central switched position and is engaged with the switch-over mechanism in its two other switched positions.

3. Audio tape cassette apparatus according to one of Claims 1 or 2, characterized in that, in order to actuate the normal-mode/fast-mode slide and the reverse slide (31, 32) a mechanism (30) which is engaged with the said slide (31, 32) and can be coupled electromechanically is provided.

4. Audio tape cassette apparatus according to Claim 3, characterized in that the mechanism (30) which can be coupled electromechanically is driven by the motor (2) of the cassette drive.

## Revendications

1. Appareil à cassette à bande audio pour le fonctionnement en mode d'inversion, avec un dispositif de commande pour un mécanisme de commutation entraînant les plateaux d'enroulement (WT1, WT2), un curseur marche rapide/marche normale (31) et un curseur d'inversion (32) ; appareil à cassette à bande audio caractérisé en ce que le curseur marche rapide/marche normale (31) et le curseur d'inversion (32), comportant respectivement deux positions de commutation, sont couplés avec respectivement une entrée (37, 38) d'un couplage mécanique logique (W, Q, L, K, O, U, D, D′, F, F′, A, A′, P, S) dont deux sorties (39, 40) comportant respectivement une position de commutation inopérante pour l'entraînement et deux positions de commutation agissant pour l'entraînement, sont couplées avec des éléments de commutation pour la commutation du mécanisme de commutation (13, 14, 15, 16, 19, 20, 21, 24, 25), en ce que le couplage mécanique logique est réalisé de façon que chacune de ses deux sorties (39, 40) prenne la position de commutation inopérante pour l'entraînement lorsque l'autre sortie respective se trouve dans l'une des deux positions agissant pour l'entraînement, dans lesquelles l'un des entraînements possibles est en prise avec l'un des plateaux d'enroulement (WT1, WT2), en ce qu'un levier à deux bras (W) monté sur le châssis (1) de façon à pouvoir pivoter autour d'un point de rotation (33) et relié par articulation par un bras de levier au curseur d'inversion (32), comporte sur son autre bras de levier un point de rotation (L) sur lequel est montée en son milieu une bascule (K) oscillante comportant deux pivots d'articulation (O, U), en ce qu'il est prévu deux coulisses de butée (A, A′) délimitant la zone d'oscillation de la bascule (K) et montées de façon à pouvoir pivoter sur respectivement un point de rotation (D, D′) du châssis (1), ces coulisses étant en prise, par l'intermédiaire d'éléments de guidage (F, F′ ; 36, 36′), avec un curseur de commande (Q) susceptible de se déplacer perpendiculairement à la direction de déplacement du point de rotation (L) de la bascule (K) et couplé par l'intermédiaire d'un agencement de levier (35) avec le curseur (31) de marche normale/marche rapide, de sorte que, dans la position marche normale, le pivot d'articulation (U) de la bascule (K) relié à la mécanique de commutation pour l'entraînement en marche rapide et constituant un point de rotation, est coincé dans une position médiane inopérante pour l'entraînement en marche rapide, et en ce que, dans la position de marche rapide, l'autre pivot d'articulation (O) de la bascule (K) relié à la mécanique de commutation pour l'entraînement en marche normale et constituant également un point de rotation, est coincé dans une position médiane inopérante pour l'entraînement en marche normale.

2. Appareil à cassette à bande audio selon la revendication 1, caractérisé en ce que, la commutation marche rapide/marche normale et la commutation en inversion s'effectuent en ce que pour chacun des deux types de commutation, il est prévu au moins une roue de commutation (16; 24, 25) qui, dans une position de commutation médiane est respectivement hors de prise avec le mécanisme de commutation tandis que dans ses deux autres positions de commutation, la roue de commutation est en prise avec le mécanisme de commutation.

3. Appareil à cassette à bande audio selon l'une des revendications 1 ou 2 caractérisé en ce que pour l'actionnement du curseur de marche normale/marche rapide et du curseur d'inversion (31, 32) il est prévu un mécanisme (30) susceptible d'être couplé électromécaniquement et venant en prise avec ces curseurs.

4. Appareil à cassette à bande audio selon la revendication 3, caractérisé en ce que le mécanisme (30) susceptible d'être couplé électromécaniquement est entraîné par le moteur (2) du mécanisme de déroulement de la bande magnétique des cassettes.
